(19) Europäisches Patentamt
European Patent Office
Office européen des brevets

(11) Veröffentlichungsnummer : **0 305 021 B1**

(12) # EUROPÄISCHE PATENTSCHRIFT

(45) Veröffentlichungstag der Patentschrift : **29.01.92 Patentblatt 92/05**

(51) Int. Cl.[5] : **C09B 62/51,** C09B 62/085, D06P 1/38

(21) Anmeldenummer : **88202095.1**

(22) Anmeldetag : **20.09.85**

(54) **Reaktive Monoazofarbstoffe, deren Herstellung und Verwendung.**

(30) Priorität : **26.09.84 CH 4612/84**

(43) Veröffentlichungstag der Anmeldung : **01.03.89 Patentblatt 89/09**

(45) Bekanntmachung des Hinweises auf die Patenterteilung : **29.01.92 Patentblatt 92/05**

(84) Benannte Vertragsstaaten : **BE CH DE FR GB IT LI**

(56) Entgegenhaltungen :
**EP-A- 0 032 187**
**EP-A- 0 040 806**
**EP-A- 0 111 830**

(60) Veröffentlichungsnummer der früheren Anmeldung nach Art. 76 EPü : **0 177 445**

(73) Patentinhaber : **CIBA-GEIGY AG**
**Klybeckstrasse 141**
**CH-4002 Basel (CH)**

(72) Erfinder : **Tzikas, Athanassios, Dr.**
**Muttenzerstrasse 78**
**CH-4133 Pratteln (CH)**

EP 0 305 021 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere inbezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind reaktive Monoazofarbstoffe der Formel

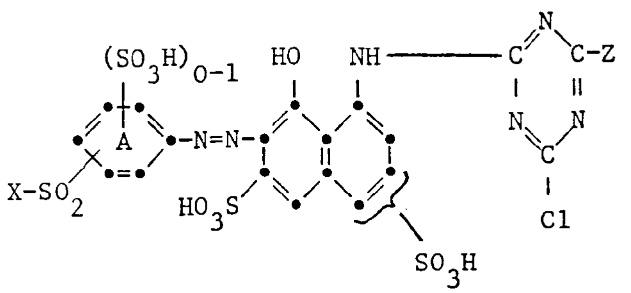

(1)

und der Formel

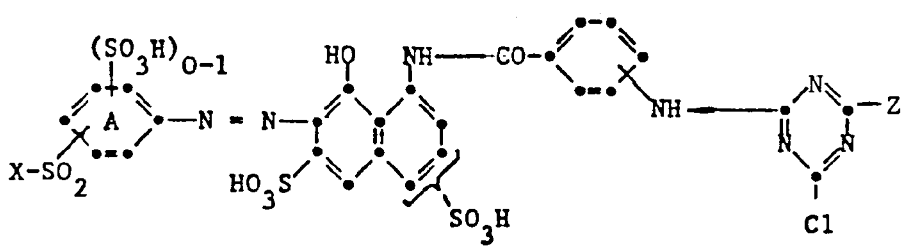

(2),

worin Z eine von Sulfo- oder Carboxygruppen freie, unsubstituierte oder substituierte Aminogruppe, ausgenommen Methylamino, und X die Vinyl-, β-Sulfatoäthyl, β-Thiosulfatoäthyl-, β-Chloräthyl oder β-Acetoxyäthyl-Gruppe ist und der Benzolring A gegebenenfalls weitersubstituiert ist.

Der Benzolring A kann in der üblichen Weise substituiert sein. Als Beispiele für weitere Substituenten seinen genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro,

Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Als Substituenten kommen in Betracht vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Als unsubstituierte oder substituierte Aminogruppen Z in den Chlor-1,3,5-triazinylresten kommen in Betracht: $-NH_2$, Alkylamino-, N,N-Dialkylamino-, Cycloalkylamino, N,N-Dicycloalkylamino-, Aralkylamino-, Arylaminogruppen, gemischtsubstituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N -heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z.B. durch: Halogen, wie Fluor, Chlor und:Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido oder Hydroxy. Als Beispiele tür derartige Aminogruppen seien genannt: $-NH_2$, Aethylamino, Propylamino, Isopropylamino, Butylamino, Hexylamino, β-Methoxyäthylamino, y-Methoxypropylamino, β-Aethoxyäthylamino, N,N-Dimethylamino, N,N-Diäthylamino, β-Chloräthylamino, β-Cyanäthylamino, γ-Cyanpropylamino, β-Hydroxyäthylamino, N,N-Di-β-hydroxyäthylamino, γ-Hydroxypropylämino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-Hydroxyäthyl-N-phenylamino, Morpholino, Piperidino und Piperazino. Die Reaktivfarbstoffe der Formel (1) enthalten zwei Arten von Reaktivresten, die nach Art einer nucleophilen Substitution und nach Art einer nucleophilen Addition reagieren können. Unter faserreaktiven Verbindundungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Die Reaktivreste, d.h. der Vinyl- oder β-Sulfatoäthyl- etc. -sulfonylrest und der Chlortriazinylrest sind an verschiedene Reste von Ausgangskomponenten, d.h. Diazo- und Kupplungskomponenten, gebunden. Bevorzugte Formelvarianten der Reaktivfarbstoffe der Formel (1) sind:

a) Reaktive Monoazofarbstoffe der Formel

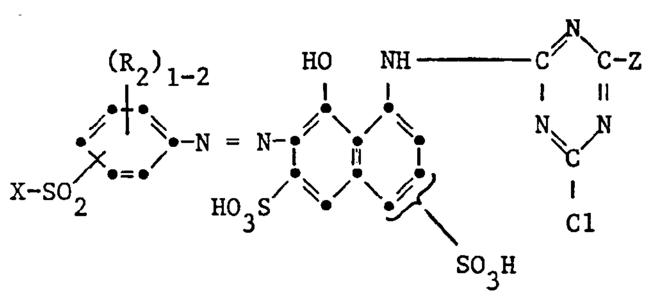

(3),

worin Z und X die unter Formel (1) angegebenen Bedeutungen haben, und $R_2$ für 1 bis 2 Substituenten aus der Gruppe $C_{1-4}$-Alkyl, $C_{1-4}$-Alkoxy, Halogen, Carboxy und Sulfo steht.

b) Reaktive Monoazofarbstoffe der Formel

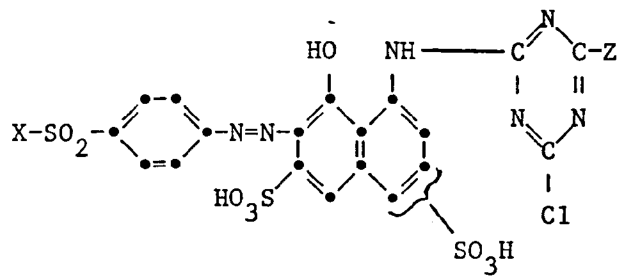

(4),

worin Z ein unsubstituierter oder substituierter Naphthylaminorest, ein unsubstituierter oder substituierter Phenylaminorest, oder ein unsubstituierter oder substituierter N-Alkylamino- oder N,N-Dialkylaminorest ist, und X die für die unter Formel (1) geltende Bedeutung hat.

c) Reaktive Monoazofarbstoffe der Formeln (1) und (2), worin die Benzolringe A nicht weitersubstituiert sind.

d) Reaktive Monoazofarbstoffe gemäss Formel (1) oder (2), oder a) bis c), worin Z
$NH_2$, N-$C_{1-4}$-Alkylamino oder N,N-Di-$C_{1-4}$-alkylamino, das durch Hydroxy, Cyan oder $C_{1-4}$-Alkoxy substituiert sein kann, N-$C_{1-4}$-Alkyl-N-phenylamino, das im Phenyl durch $C_{1-4}$-Alkyl substituiert sein kann, Cyclohexylamino, Morpholino oder Phenylamino, das durch $C_{1-4}$-Alkyl, Halogen oder Hydroxy substituiert sein kann, wobei die unter Formel (1) angegebene Einschränkung gilt.

e) Reaktive Monoazofarbstoffe gemäss Formel (1) oder (2), oder gemäss a) bis d), worin X die Vinyl- oder β-Sulfatoäthyl-Gruppe ist.

Im besonderen bevorzugt sind reaktive Monoazofarbstoffe der Formel (1) und (2), worin Z ein Rest der Formel

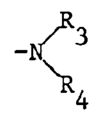

ist, worin $R_3$ und $R_4$ unabhängig voneinander Wasserstoff, $C_{1-4}$-Alkyl, das gegebenenfalls substituiert ist durch Halogen, Cyan, $C_{1-4}$-Alkoxy, Hydroxy oder Sulfato, Benzyl, Phenäthyl, Cyclohexyl, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido oder Hydroxy, oder Naphthyl, das gegebenenfalls substituiert ist durch Halogen, Nitro, $C_{1-4}$-Alkoxy, $C_{1-4}$-Alkanoylamino oder Hydroxy, ist, oder worin $R_3$ und $R_4$ zusammen mit dem Aminostickstoffatom einen Morpholino-, Piperidino- oder Piperazinorest bilden, wobei die unter Formel (1) angegebene Einschränkung gilt.

Das Verfahren zur Herstellung der reaktiven Monoazofarbstoffe der Formel (1) und (2) ist dadurch gekennzeichnet, dass man Farbstoffe der Formel

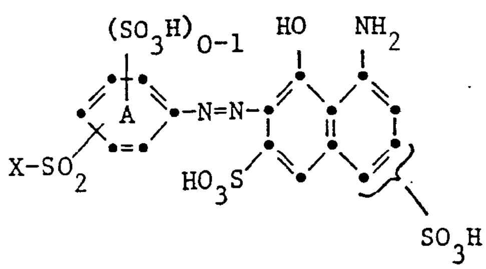

(5)

oder der Formel

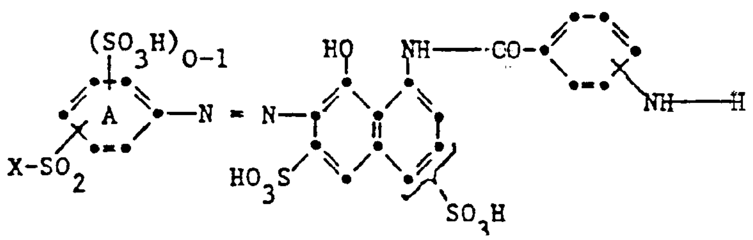

(6)

worin X die unter Formel (1) angegebene Bedeutung hat, oder ihre VorProdukte mit 2,4,6-Trichlor-s-triazin and Aminen der Formel

H-Z (7)

worin Z die unter Formel (1) angegebene Bedeutung hat, zu reaktiven Monoazofarbstoffen der Formel (1) oder (2) umsetzt, oder die erhaltenen Zwischenprodukte in die gewünschten Endfarbstoffe überführt, und gegebenenfalls eine weitere Umwandlungsreaktion anschliesst.

Man geht somit von Farbstoffen aus, die eine X-$SO_2$-Gruppe bereits enthalten, und acyliert die Gruppe -$NH_2$ mit 2,4,6-Trichlor- oder Aminodichlortriazin; oder man verwendet entsprechende Vorprodukte, z.B. eine Diazokomponente der Formel

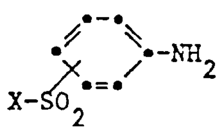

(8)

und kuppelt diese auf welche eine Gruppe -$NH_2$ enthält, und acyliert die Gruppe -$NH_2$ vor oder nach der Kupplung mit 2,4,6-Trichlor- oder Amino-dichlortriazin.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff der Formel (5) oder (6), worin X ein Rest HO-$CH_2CH_2$- ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin X die Vinylgruppe $H_2C$=CH- ist, und lagert an das Zwischenprodukt Thioschwefelsäure an, wobei ein Rest $HO_3SS$-$CH_2CH_2$-entsteht. Die Sulfatierung der Hydroxygruppe in einem Farbstoff der Formel (5) oder (6) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit 2 Aequivalenten Chlorsulfonsäure pro Hydroxygruppe in einem polaren organischen Lösungsmittel, wie beispielsweise N-Methylpyrrolidon, beil10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe der Formel (1) oder (2), welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der Farbstoffe der Formel (5) oder (6) oder der Farbstoffvorprodukte mit 2,4,6-Trichlor- oder Amino-dichlortriazin erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) oder (2) verwendet werden können, einzeln genannt werden.

Als Farbstoffe der Formel (6) kommen besonders Farbstoffe der folgenden Strukturtypen in Betracht:

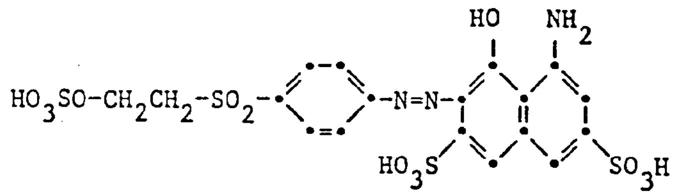

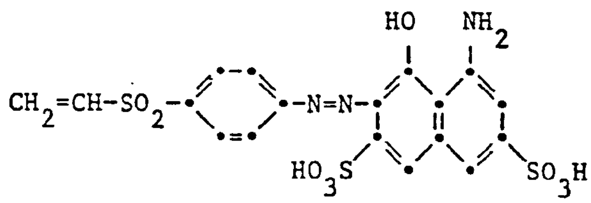

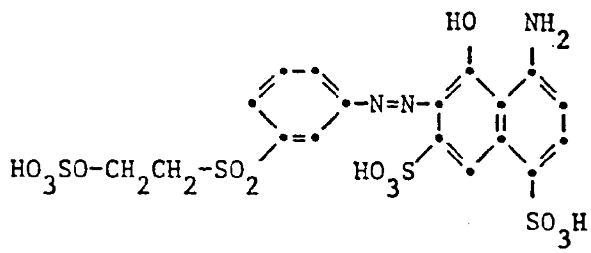

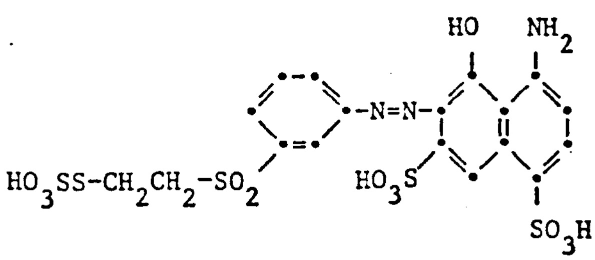

Geht man zur Herstellung der reaktiven Monoazofarbstoffe der Formel (1) nicht von den fertigen Aminofarbstoffen, z.B. solchen die weiter vorn beschrieben sind, sondern von Farbstoffvorprodukten, d.h. den Diazo- und Kupplungskomponenten aus, muss eine der beiden Komponenten eine acylierbare Aminogruppe und die andere eine Gruppe X-$SO_2$- aufweisen. Als Diazokomponenten kommen geeignete Verbindungen aus der Aminobenzolreihe in Betracht, beispielsweise solche, die in den Azofarbstoffen der oben angegebenen Formeln enthalten sind.

Aromatische Amine, die als Diazokomponenten zur Herstellung der Monoazofarbstoffe dienen können, und die eine Gruppe der Formel X-$SO_2$- enthalten, sind z.B.:

1-Amino-4-β-sulfatoäthylsulfonylbenzol, 1-Amino-4-β-thiosulfatoäthylsulfonylbenzol; 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfätoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-β-sulfatoäthylsulfonylbenzol, 1-Amino-2-hydroxy-4-β-sulfatoäthylsulfonylbenzol, 1-Amino-2-hydroxy-5-β-sulfatoäthylsulfonylbenzol-3-sulfonsäure, 1-Amino-2-brom-4-β-sulfatoäthylsulfonylbenzol und 1-Amino-2,6-dichlor-4-β-sulfatoäthylsulfonylbenzol.

Ferner sind zu erwähnen die entsprechenden β-Hydroxy-verbindungen, welche als Vorprodukte verwendet werden können, z.B.: 1-Amino-4-β-hydroxyäthylsulfonylbenzol oder 1-Amino-3-β-hydroxyäthylsulfonylbenzol. Die Kupplungskomponenten sind geeignete Verbindungen der Aminonaphthalinreihe. Als Beispiele seien genannt:

1-Amino-8-hydroxynaphthalin-3,6- bzw. -4,6-disulfonsäure, 1-(4′-Aminobenzoylamino)-8-hydroxynaphthalin-3,6- bzw. -4,6-disulfonsäure oder 1-(3′-Aminobenzoylamino)-8-hydroxynaphthalin-3,6- bzw. -4,6-disulfonsäure.

Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Kondensation des 2,4,6-Trichlor- oder Amino-dichlortriazins mit den Diazokomponenten oder den Kupplungskomponenten bzw. mit acylierbaren Monoazo- oder Disazo-Zwischenprodukten bzw. mit den aminogruppenhaltigen Farbstoffen der Formel (5) oder (6) oder deren Vorprodukten erfolgen vorzugsweise in wässriger Lösung oder Suspension, beiniedriger Temperatur und bei schwach saurem, neutralem bis schwach alkalischem pH-Wert. Vorteilhaft wird der bei der Kondensation freiwerdende Chlorwasserstoff laufend durch Zugabe wässriger Alkalihydroxide, -carbonate oder -bicarbonate neutralisiert.

Weitere Ausgangsverbindungen:

<u>2,4,6-Trichlor-s-triazin(Cyanurchlorid)</u>

<u>Amine der Formel (7)</u>

Ammoniak, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, N-β-Hydroxyäthylanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitro-anilin, 2-Nitro-4-methyl-anilin, 3-Nitro-4-methylanilin, o-, m- und p-Anisidin, o-, m- und p-Phenetidin, Naphthylamin-(1), Naphthylamin-(2), 2-Amino-1-hydroxynaphthalin, 1-Amino-4-hydroxynaphthalin, 1-Amino-8-hydroxynaphthalin, 1-Amino-2-hydroxynaphthalin, 1-Amino-7-hydroxynaphthalin, 2-, 3- und 4-Aminopyridin, 2-Aminobenzthiazol, 5-, 6- und 8-Aminochinolin, 2-Aminopyrimidin, Morpholin, Piperidin, Piperazin.

Die Kondensationen des 2,4,6-Trichlor-s-triazins mit den Farbstoffen der Formel (5) oder (6) oder Kupplungskomponenten oder den Aminoverbindungen der Formel (7) erfolgen vorzugsweise in wässriger Lösung oder Suspension, bei niedriger Temperatur und bei schwach saurem, neutralem bis schwach alkalischem pH-Wert, so dass im fertigen Reaktivfarbstoff der Formel (1) oder (2) noch mindestens ein Chloratom als abspaltbarer Rest übrig bleibt. Vorteilhaft wird der bei der Kondensation freiwerdende Chlorwasserstoff laufend durch Zugabe wässriger Alkalihydroxide, -carbonate oder -bicarbonate neutralisiert.

Die Reaktivfarbstoffe der Formel (1) und (2) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) und (2) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Besonders geeignet sind sie für das sogenannte Kaltverweilverfahren, wonach der Farbstoff zusammen mit dem Alkali auf dem Foulard aufgebracht wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) und (2) zeichnen sich durch hohe Reaktivität und gutes Fixiervermögen aus. Sie können daher nach dem Ausziehfärbeverfahren bei niederigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) und (2) eignen sich auch zum Druck, vor allem auf Baumwolle, ebenso aber auch zum Bedrucken von stickstoffhaltigen Fasern, z.B. von Wolle, Seide, oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch-in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Aus der Deutschen Patentschrift 1 265 698 und den Europäischen Patentanmeldungen EP-A-32187 und EP-A-40806 sind ähnliche bireaktive Farbstoffe bekannt. Diese weisen jedoch nicht gleich gute Eigenschaften wie die erfindungsgemässen Farbstoffe auf.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

281 Teile 4-β-Sulfatoäthylsulfonyl-anilin werden in 1000 Teilen Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stünden bei diesem pH weiterrühren, gibt sodann 750 Teile Eis und 255 Teile einer 31%igen wässrigen Salzsäure hinzu; anschliessend lässt man 173 Teile der 40%igen wässrigen Natriumnitrilösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-3,6-disulfonsäure und N-Methyl-anilin einlaufen. Diese Lösung des sekundären Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33%igen Natronlauge eingetragen; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 107 Teile N-Methyl-anilin ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20°C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C ererwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

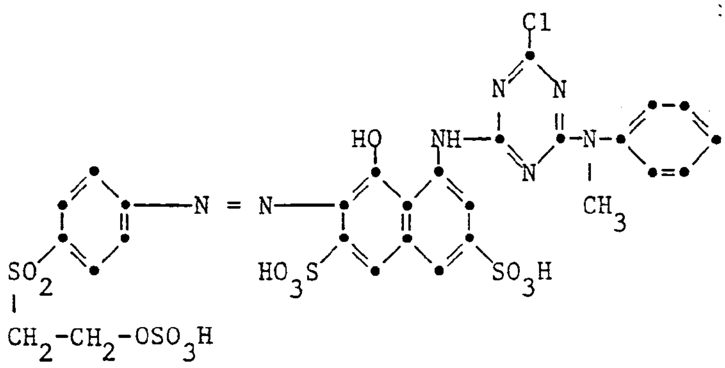

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Beispiel 2:

Es wird eine neutrale wässrige Lösung mit einem pH-Wert von 6,5 aus 297 Teilen 4-β-Thiosulfatoäthylsulfonyl-anilin in 1000 Teilen Wasser hergestellt. beschliessend gibt man etwa 600 Teile Eis hinzu, desweiteren langsam unter Rühren etwa 200 Teile einer konzentrierten wässrigen Salzsäure, bis ein pH-Wert von 2 erreicht ist. Sodann lässt man 173 Teile einer wässrigen 40%igen Natriumnitritlösung bei einer Temperatur von 0 bis 5°C einlaufen, rührt eine Stunde nach und zerstört überschüssige salpetrige Säure mittels Amidosulfonsäure. Diese erhaltene

Diazoniumsalzsuspension wird mit der wässrigen Lösung des sekundären Kondensationsproduktes von je einem Mol Cyanurchlorid und 1-Amino-8-naphthol-3,6-disulfonsäure und Aminoacetonitril gekuppelt, wobei man gemäss der in Beispiel 1 beschriebenen Verfahrensweise vorgeht. Nach Beendigung der Kupplungsreaktion, Klärung und Isolierung des Farbstoffes, beispielsweise durch Sprühtrocknung oder Aussalzen mit Natriumchlorid, erhält man ein rotes elektrolythaltiges Pulver mit dem entsprechenden Alkalimetallsalz der Verbindung der Formel

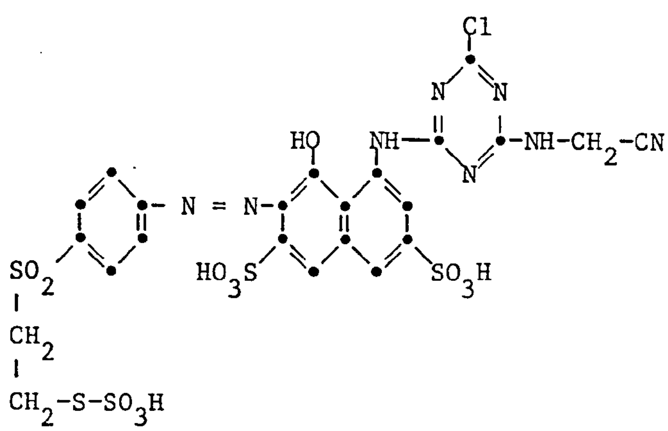

Diese Verbindung besitzt ebenso sehr gute Farbstoffeibenschaften und färbt Polyamidfasermaterialien, wie insbesondere Wolle, und Cellulosefasermaterialien nach den üblichen Färbe- und Fixiermethoden für Farbstoffe, die eine faserreaktive Gruppe, insbesondere die β-Thiosulfatoäthylsulfonyl-Gruppe, besitzen, in klaren roten Tönen mit sehr guten Nassechtheiten, wie sie beispielsweise für den Farbstoff des Beispieles 1 genannt sind.

Beispiel 3:

281 Teile 4-β-Sulfatoäthylsulfonyl-anilin werden in 1000 Teilen Wasser eingetragen und durch vorsichtige

Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31%igen wässrigen Salzsäure hinzu; anschliessend lässt man 173 Teile der 40%igen wässrigen Natriumnitrillösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-3,6-disulfonsäure und Dicyanäthylamin einlaufen. Diese Lösung des sekundären Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33%igen Natronlauge eingetragen; der pH-Wert der Lösung soll anschliessend 6,5 bis 7,0 betragen.Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 133 Teile Dicyanäthylamin ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20°C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolyhaltiges und gegebenenfalls die erwähnte Puffersubstanz enthaltendes Pulver erhalten, das das Alkalimetallsalz, insbesondere Natriumsalz der Verbindung der Formel

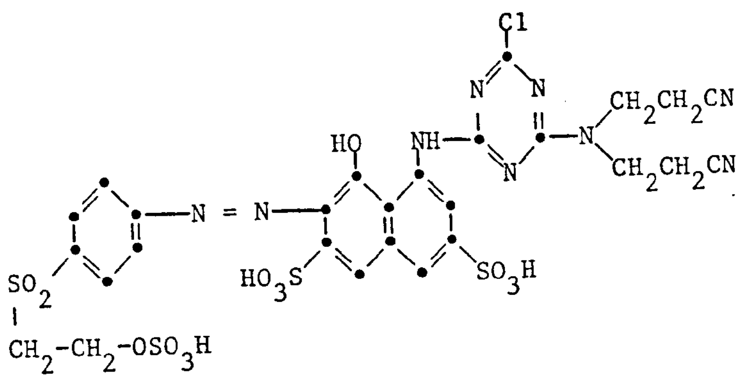

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Beispiel 4:

Es wird eine neutrale wässrige Lösung mit einem pH-Wert von 6,5 aus 297 Teilen 4-β-Thiosulfatoäthylsulfonyl-anilin in 1000 Teilen Wasser hergestellt. Anschliessend gibt man etwa 600 Teile Eis hinzu, desweiteren langsam unter Rühren etwa 200 Teile einer konzentrierten wässrigen Salzsäure, bis ein pH-Wert von 2 erreicht ist. Sodann lässt man 173 Teile einer wässrigen 40%igen Natrium nitritlösung bei einer Temperatur von 0 bis 5°C einlaufen, rührt eine Stunde nach und zerstört überschüssige salpetrige Säure mittels Amidosulfonsäure. Diese erhaltene Diazoniumsalzsuspension wird mit der wässrigen Lösung des sekundären Kondensationsproduktes von je einem Mol Cyanurchlorid und 1-Amino-8-naphthol-3,6-disulfonsäure und N-Methyl-O-toluolidin gekuppelt, wobei man gemäss der in Beispiel 1 beschriebenen Verfahrensweise vorgeht. Nach Beendigung der Kupplungsreaktion, Klärung und Isolierung des Farbstoffes, beispielsweise durch Sprühtrocknung oder Aussalzen mit Natriumchlorid, erhält man ein rotes elektrolythaltiges Pulver mit dem entsprechenden Alkalimetallsalz der Verbindung der Formel

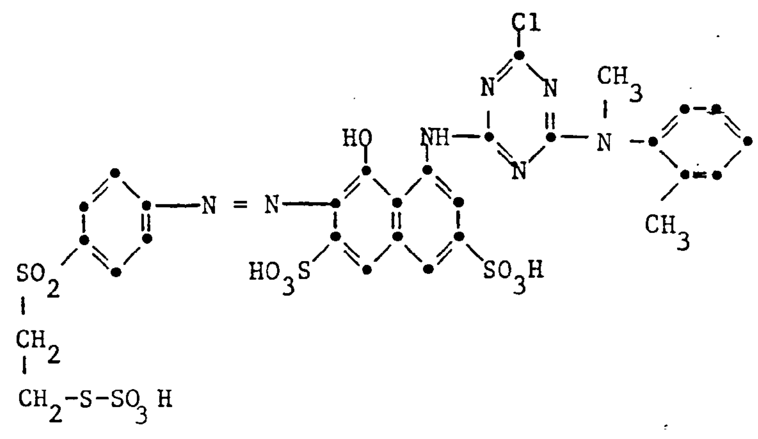

Diese Verbindung besitzt ebenso sehr gute Farbstoffeigenschaften und.färbt Polyamidfasermaterialien, wie inbesondere Wolle, und Cellulosefasermaterialien nach den üblichen Färbe- und Fixiermethoden für Farbstoffe, die eine faserreaktive Gruppe, insbesondere die β-Thiosulfatoäthylsulfonyl-Gruppe, besitzen, in klaren roten Tönen mit sehr guten Nassechtheiten, wie sie beispielsweise für den Farbstoff des Beispieles 1 genannt sind.

Beispiel 5:

195 Teile Cyanurchlorid werden in 800 Volumenteilen Aceton gelöst; unter gutem Rühren gibt man diese Lösung in eine Mischung von 1300 Teilen Wasser und 1300 Teilen zerstossenem Eis sowie 20 Volumenteilen einer 2n-Salzsäure. Zu dieser so erhaltenen Suspension lässt man innerhalb von 50 bis 60 Minuten unter Rühren eine Lösung mit einem pH-Wert von 6,9 bis 7,2 aus 319 Teilen 1-Amino-8-naphthol-4,6-disulfonsäure, 65 Teilen Natriumcarbonat und 2000 Teilen Wasser einlaufen. Die Umsetzung des Cyanurchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit einer gemäss Beispiel 1 hergestellten Diazoniumsalzsuspension versetzt. Man rührt 2 Stunden lang und erhöht in dieser Zeit durch portionsweises Einstreuen von Natriumcarbonat den pH-Wert auf 6,5 bis 7,0. Es wird noch eine Stunde bei diesem pH-Wert und bei Raumtemperatur weitergerührt. Anschliessend gibt man 107 Teile N-Methylanilin und portionsweise etwa 110 Teile Natriumcarbonat hinzu, um den pH-Wert auf 5,0 bis 6,0 zu halten. Diese Reaktionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel

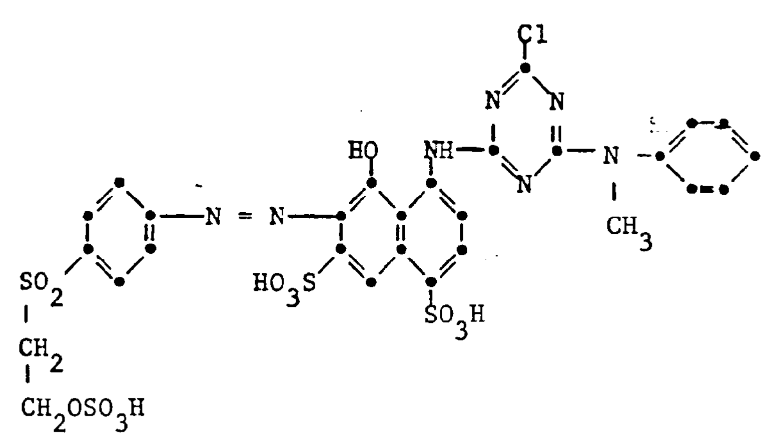

enthält. Diese Azoverbindung eignet sich hervorragend als Farbstoff. In Folge seiner faserreaktiven Eigenschaften liefert er beispielsweiseaus wässrig-alkalischer Flotte nach einem üblichen Auszieh- oder Klotzverfahren farbtiefe, rote Färbungen auf Baumwollfasern. Die Färbungen besitzen sehr gute Wasch- und

Lichtechtheiten.

Beispiel 6:

195 Teile Cyanurchlorid werden in 800 Volumenteilen Aceton gelöst; unter gutem Rühren gibt man diese Lösung ein eine Mischung von 1300 Teilen Wasser und 1300Teilen zerstossenem Eis sowie 20 Volumenteilen einer 2n-Salzsäure. Zu dieser So erhaltenen Suspension lässt man innerhalb von 50 bis 60 Minuten unter Rühren eine Lösung mit einem pH-Wert von 6,9 bis 7,2 aus 319 Teilen 1-Amino-8-naphthal-4,6-disulfonsäure, 65 Teilen Natriumcarbonat und 2000 Teilen Wasser einlaufen. Die Umsetzung des Cyanurchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit einer gemäss Beispiel 1 hergestellten Diazoniumsalzsuspension versetzt. Man rührt 2 Stunden lang und erhöht in dieser Zeit durch protionsweises Einstreuen von Natriumcarbonat den pH-Wert auf 6,5 bis 7,0. Es wird noch eine Stunde bei diesem pH-Wert und bei Raumtemperatur weitergerührt. Anschliessend gibt man 925 Teile Aminoacetonitrilhydrochlorid und portionsweise etwa 110 Teile Natriumcarbonat hinzu, um den pH-Wert auf 5,0 bis 6,0 zu halten. Diese Reaktionslösung wird auf 50°C erwärmt und unter Rühren bei dieser Temperatur eine Stunde gehalten. Nach dem Abkühlen,der Reaktionslösung wird die gebildete Azoverbindung mittels Natriumchlorid ausgefällt, abgesaugt und bei 60°C unter reduziertem Druck getrocknet. Es wird ein rotes, elektrolyhaltiges Pulver erhalten, das das Natriumsalz der Verbindung der Formel

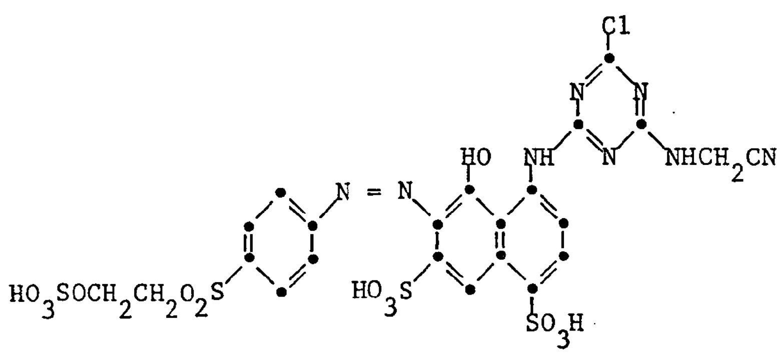

enthält. Diese Azoverbindung eignet sich hervorragend als Farbstoff. In Folge seiner faserreaktiven Eigenschaften liefert er beispielsweise aus wässrig-alkalischer Flotte nach einem üblichen Auszieh- und Klotzverfahren farbtiefe, rote Färbungen auf Baumwollfasern. Die Färbungen besitzen sehr gute Wasch- und Lichtechtheiten.

Nach den in den Beispielen 1 bis 6 beschriebenen Verfahren können weitere wertvolle Reaktivfarbstoffe der allgemeinen Formel (1) hergestellt werden, wobei die in der folgenden Tabelle aufgeführten Symbole $D_1$, K und Z die unter Formel (1) angegebenen Bedeutungen haben, und $W_1$: $-SO_2CH_2CH_2OSO_3H$, $W_2$: $-SO_2CH_2CH_2SSO_3H$ und $W_3$: $-SO_2-CH=CH_2$ ist. In der letzten Spalte der Tabelle ist der mit dem betreffenden Farbstoff auf Baumwolle erzielte Farbton angegeben.

| Beispiel | $D_1$ | K | Z | Farbton |
|---|---|---|---|---|
| 7 | 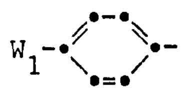 | 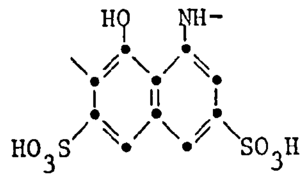 | 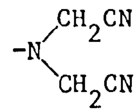 | rot |
| 8 | 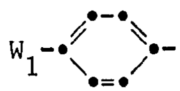 | 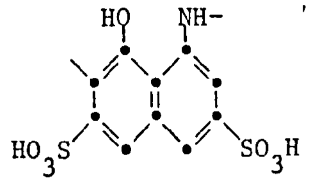 | $-NH_2$ | rot |
| 9 | 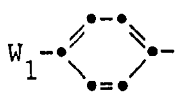 | 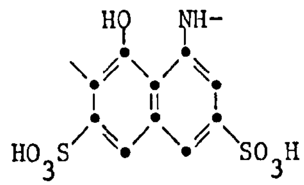 | 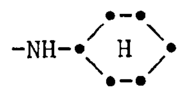 | rot |
| 10 | 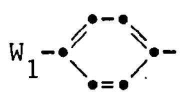 | 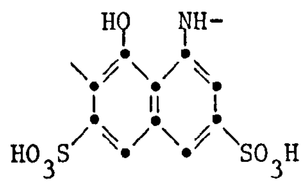 | $-N(C_2H_4OH)_2$ | rot |

| Beispiel | $D_1$ | K | Z | Farbton |
|---|---|---|---|---|
| 11 | 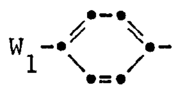 | 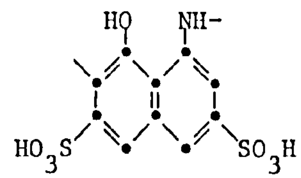 | $-NH(CH_2)_3OCH_3$ | rot |
| 12 | 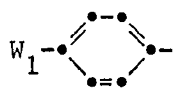 | 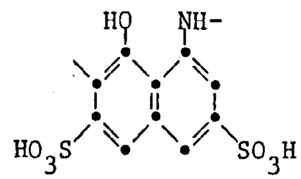 | $-NHCH_2CH_2OH$ | rot |
| 13 | 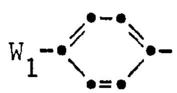 | 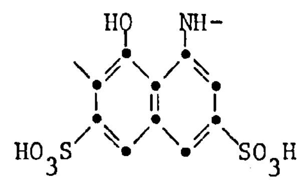 | 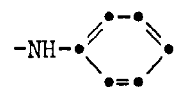 | rot |
| 14 | 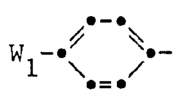 | 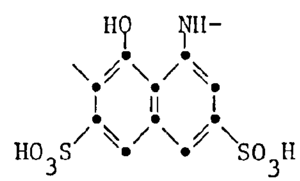 | 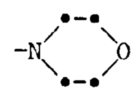 | rot |

| Beispiel | $D_1$ | K | Z | Farbton |
| --- | --- | --- | --- | --- |
| 15 | 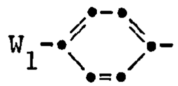 | 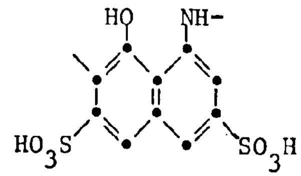 | 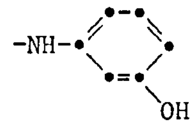 | rot |
| 16 | 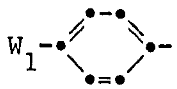 | 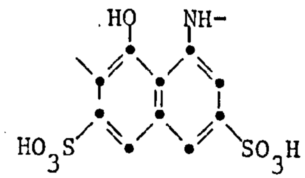 | 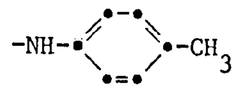 | rot |
| 17 | 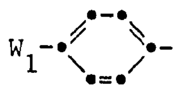 | 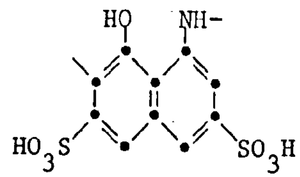 | 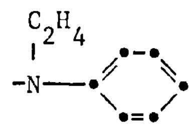 | rot |
| 18 | 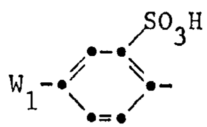 | 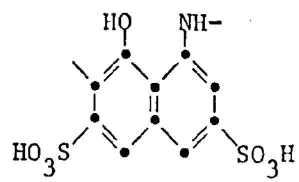 | $-NH_2$ | rot |

| Beispiel | $D_1$ | K | Z | Farbton |
|---|---|---|---|---|
| 19 | 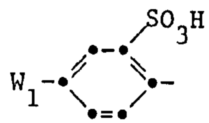 | 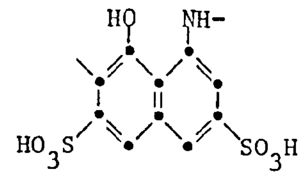 | $-HN-C_2H_4OH$ | rot |
| 20 | 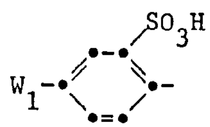 | 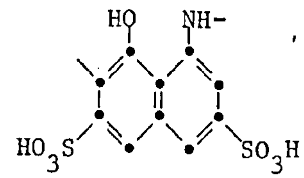 | $-NH-CH_2CN$ | rot |
| 21 | 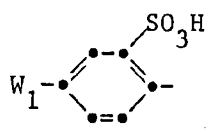 | 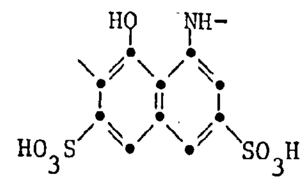 | 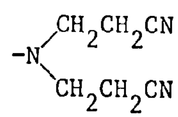 | rot |
| 22 | 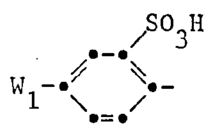 | 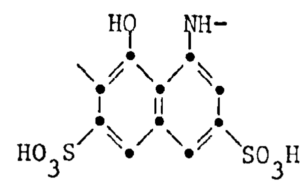 | 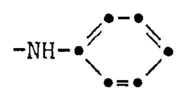 | rot |

| Beispiel | $D_1$ | K | Z | Farbton |
|---|---|---|---|---|
| 23 | 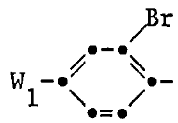 | 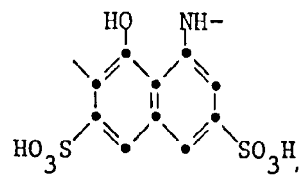 | 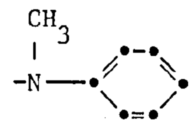 | rot |
| 24 | 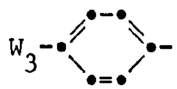 | 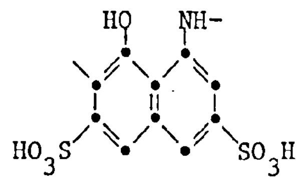 | 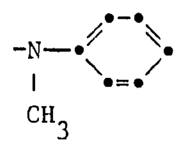 | rot |
| 25 | 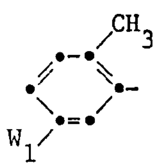 | 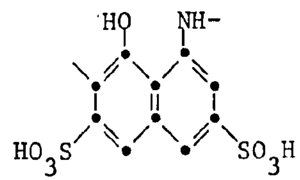 | 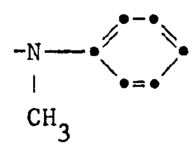 | blaustichiges rot |
| 26 | 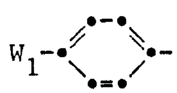 | 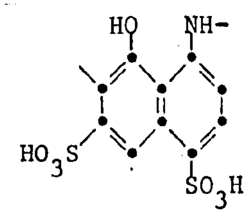 | 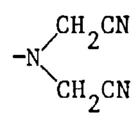 | gelbstichiges rot |

| Beispiel | $D_1$ | K | Z | Farbton |
|---|---|---|---|---|
| 27 | 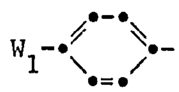 | 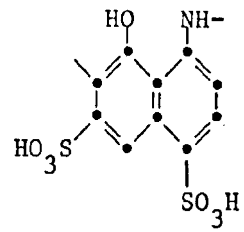 | $-NH_2$ | gelbstichiges rot |
| 28 | 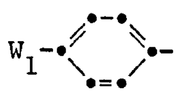 | 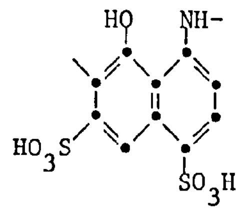 | -NH- 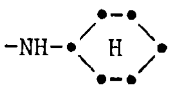 | gelbstichiges rot |
| 29 | 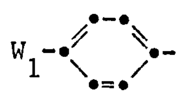 | 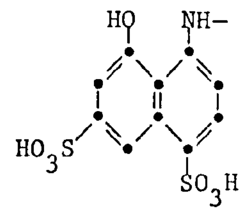 | $-N(C_2H_4OH)_2$ | gelbstichiges rot |
| 30 | 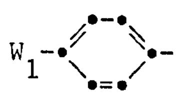 | 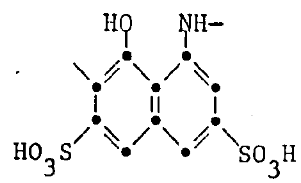 | $-NH(CH_2)_3OCH_3$ | gelbstichiges rot |

| Beispiel | $D_1$ | K | Z | Farbton |
|---|---|---|---|---|
| 31 | 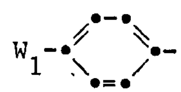 | 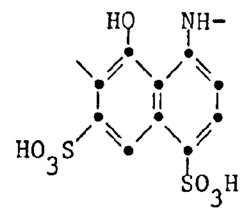 | $-NHCH_2CH_2OH$ | gelbstichiges rot |
| 32 | 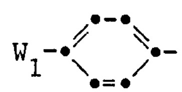 | 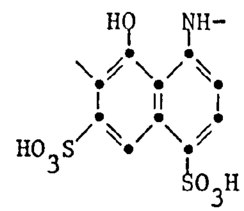 | 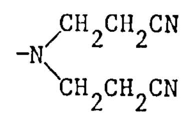 | gelbstichiges rot |
| 33 | 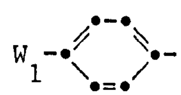 | 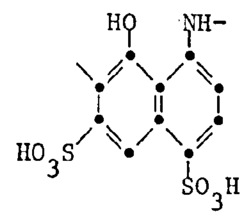 | 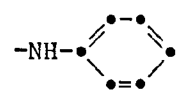 | gelbstichiges rot |
| 34 | 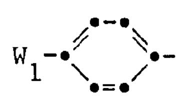 | 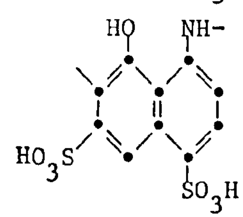 | 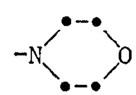 | gelbstichiges rot |

| Beispiel | $D_1$ | K | Z | Farbton |
|---|---|---|---|---|
| 35 | 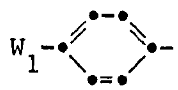 | 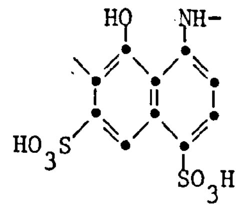 | 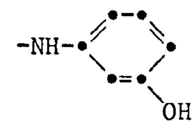 | gelbstichiges rot |
| 36 | 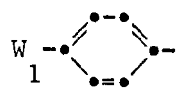 | 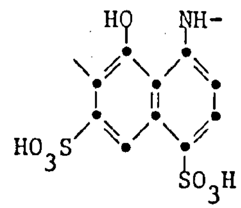 | 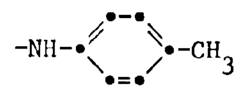 | gelbstichiges rot |
| 37 | 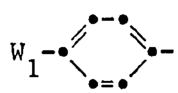 | 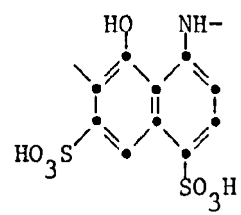 | 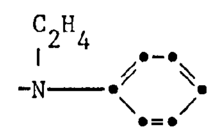 | gelbstichiges rot |
| 38 | 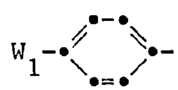 | 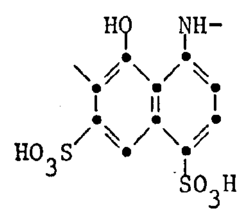 | 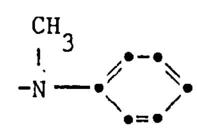 | gelbstichiges rot |

| Beispiel | $D_1$ | K | Z | Farbton |
|---|---|---|---|---|
| 39 | 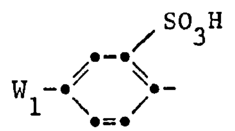 | 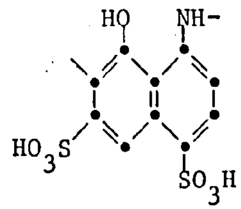 | $-NH_2$ | rot |
| 40 | 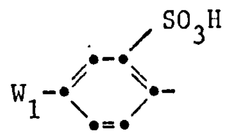 | 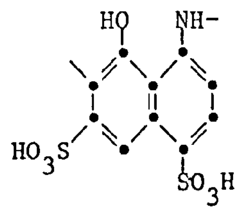 | $-HN-C_2H_4OH$ | rot |
| 41 | 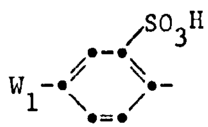 | 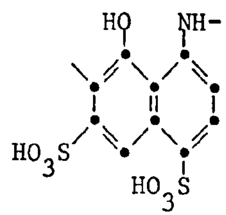 | $-NH-CH_2CN$ | rot |
| 42 | 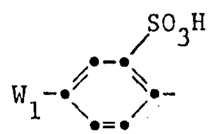 | 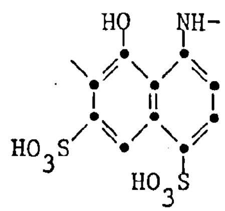 | 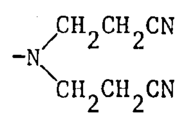 | rot |

| Beispiel | $D_1$ | K | Z | Farbton |
|---|---|---|---|---|
| 43 | 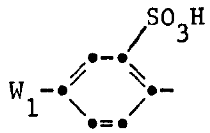 | 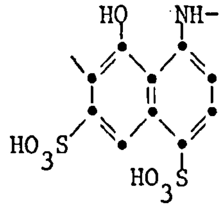 | 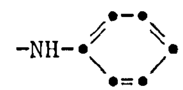 | rot |
| 44 | 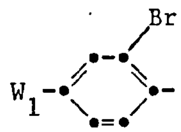 | 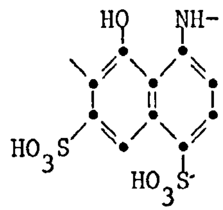 | 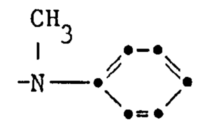 | rot |
| 45 | 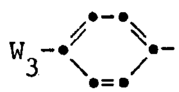 | 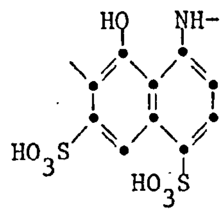 | 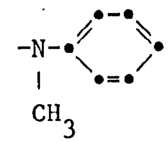 | rot |
| 46 | 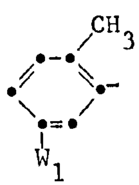 | 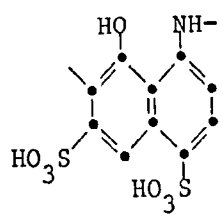 | 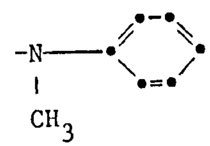 | blaustichiges rot |

## Patentansprüche

1. Reaktive Monoazofarbstoffe der Formel

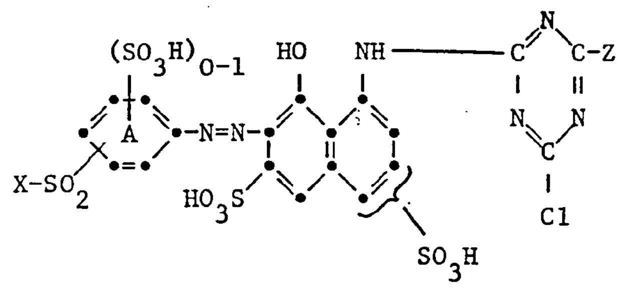

(1),

und

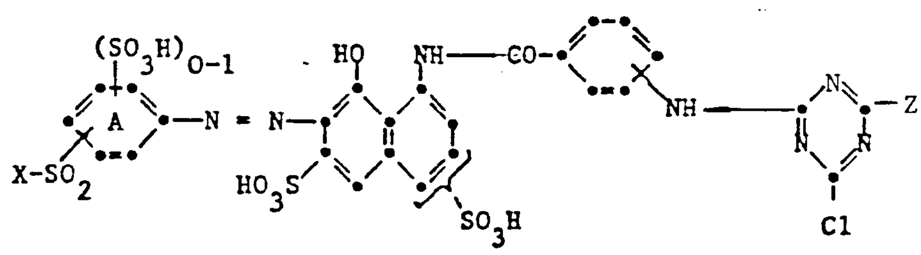

(2),

worin Z eine von Sulfo- oder Carboxygruppen freie, unsubstituierte oder substituierte Aminogruppe, ausgenommen Methylamino, und X die Vinyl-, β-Sulfatoäthyl, β-Thiosulfatoäthyl-, β-Chloräthyl oder β-Acetoxyäthyl-Gruppe ist und der Benzolring A gegebenenfalls weitersubstituiert ist.

2. Reaktive Monoazofarbstoffe gemäss Anspruch 1 der Formel

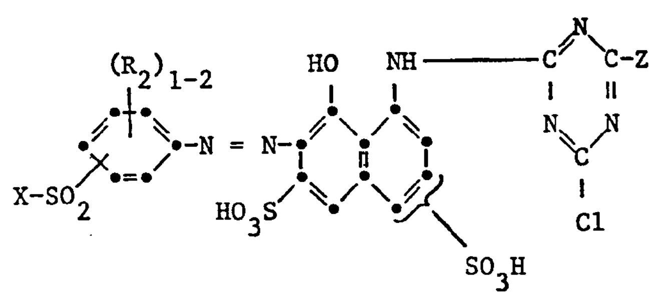

(3),

worin Z und X die für Anspruch 1 geltenden Bedeutungen haben, und $(R_2)_{1-2}$ für 1 bis 2 Substituenten aus der Gruppe $C_1$-$C_4$-Alkyl, $C_1$-$C_4$-Alkoxy, Halogen, Carboxy und Sulfo steht.

3. Reaktive Monoazofarbstoffe gemäss Anspruch 1, der Formel

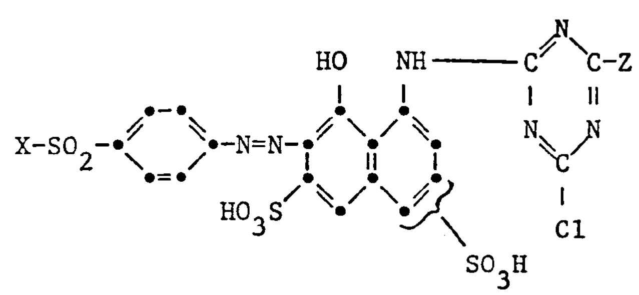

(4),

worin Z ein unsubstituierter oder substituierter Naphthylaminorest, ein unsubstituierter oder substituierter Phenylaminorest, oder ein unsubstituierter oder substituierter N-Alkylamino- oder N,N-Dialkylaminorest ist, und X

die für Anspruch 1 geltende Bedeutung hat.

4. Reaktive Monoazofarbstoffe gemäss Anspruch 1, worin Z $NH_2$, N-$C_{1-4}$-Alkylamino oder N,N-Di-$C_{1-4}$-alkylamino, das durch Hydroxy, Cyan oder $C_{1-4}$-Alkoxy substituiert sein kann, N-$C_{1-4}$-Alkyl-N-phenylamino, das im Phenyl durch $C_{1-4}$-Alkyl substituiert sein kann, Cyclohexylamino, Morpholino oder Phenylamino, das durch $C_{1-4}$-Alkyl, Halogen oder Hydroxy substituiert sein kann, ist, wobei die in Anspruch 1 angegebene Einschränkung gilt.

5. Reaktive Monoazofarbstoffe gemäss Anspruch 4, worin X die Vinyl- oder β-Sulfatoäthyl-Gruppe ist.

6. Verfahren zur Herstellung von reaktive Monoazofarbstoffen gemäss Anspruch 1, dadurck gekennzeichnet, dass man Farbstoffe der Formel

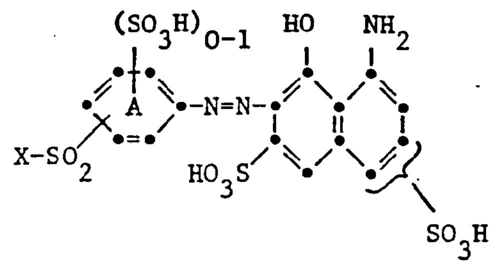

(5)

oder der Formel

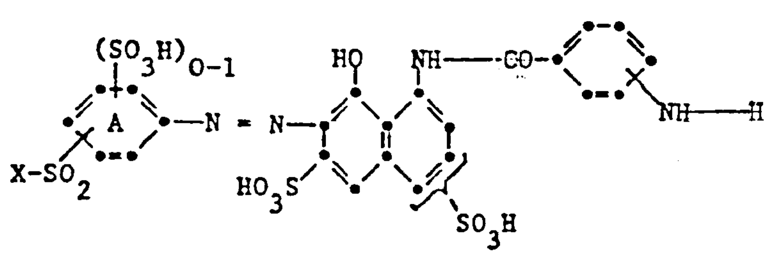

(6)

worin X die unter Formel (1) angegebene Bedeutung hat, oder ihre Vor-Produkte mit 2,4,6-Trichlor-s-triazin and Aminen der Formel

H-Z (7)

worin Z die unter Formel (1) angegebene Bedeutung hat, zu reaktiven Menoazofarbstoffen der Formel (1) oder (2) umsetzt, oder die erhaltenen Zwischenprodukte in die gewünschten Endfarbstoffe überführt, und gegebenenfalls eine weitere Umwandlungsreaktion anschliesst.

7. Verwendung der reaktiven Monoazofarbstoffe gemäss Anspruch 1, zum Färben oder Bedrucken von cellulosehaltigen Fasermaterialien.

8. Verwendung gemäss Anspruch 7, zum Färben oder Bedrucken von Baumwolle.

## Claims

1. A reactive monoazo dye of the formula

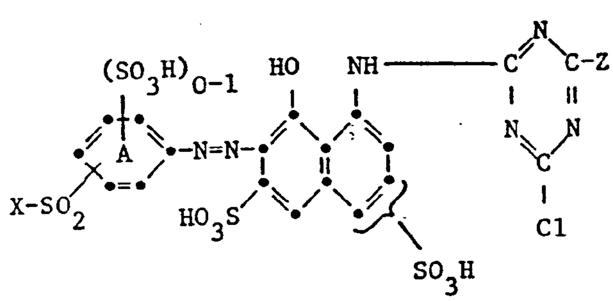

(1)

and

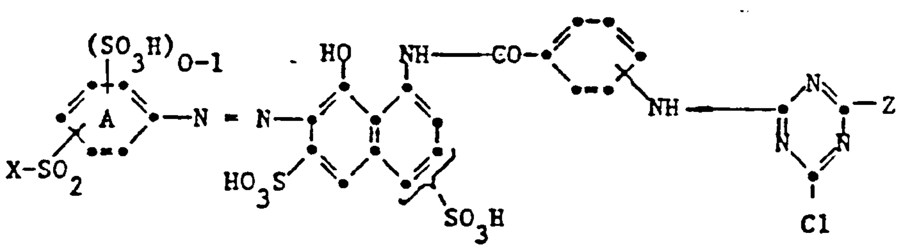

(2)

in which Z is a sulfo- or carboxyl-free, unsubstituted or substituted amino group, with the exception of methylamino and X is a vinyl, β-sulfatoethyl, β-thiosulfatoethyl, β-chloroethyl or β-acetoxyethyl group, and the benzene ring A can be further substituted.

2. A reactive monoazo dye according to claim 1, of the formula

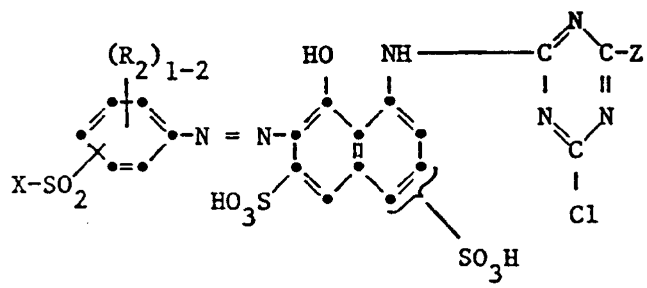

(3)

in which Z and X are as defined for claim 1 and $(R_2)_{1-2}$ is 1 or 2 substituents from the group consisting of $C_1$-$C_4$alkyl, $C_1$-$C_4$alkoxy, halogen, carboxyl and sulfo.

3. A reactive monoazo dye according to claim 1, of the formula

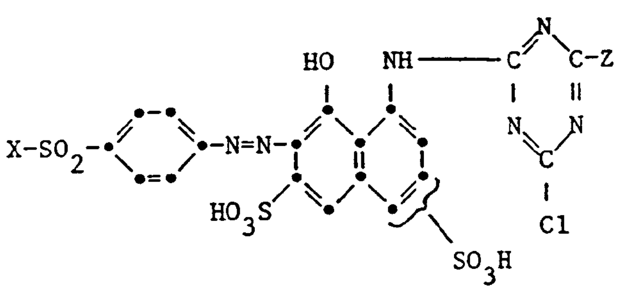

(4)

in which Z is an unsubstituted or substituted naphthylamino radical, an unsubstituted or substituted phenylamino radical or an unsubstituted or substituted N-alkylamino or N,N-dialkylamino radical, and X is as defined for claim 1.

4. A reactive monoazo dye according to claim 1, in which Z is $NH_2$, N-$C_{1-4}$alkylamino or N,N-di-$C_{1-4}$-alkylamino which can be substituted by hydroxyl, cyano or $C_{1-4}$alkoxy, N-$C_{1-4}$alkyl-N-phenylamino which can be substituted in the phenyl by $C_{1-4}$alkyl, or is cyclohexylamino, morpholino or phenylamino which can be substituted by $C_{1-4}$alkyl, halogen or hydroxyl, the restrictions stated in claim 1 being applicable.

5. A reactive monoazo dye according to claim 4, in which X is a vinyl or β-sulfatoethyl group.

6. A process for preparing a reactive monoazo dye according to claim 1, which comprises reacting a dye of the formula

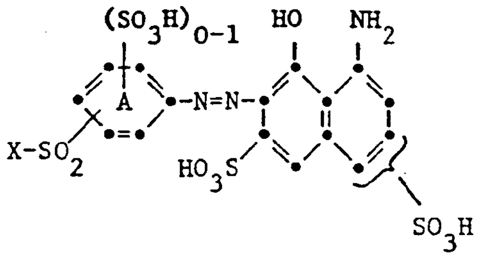

(5)

or of the formula

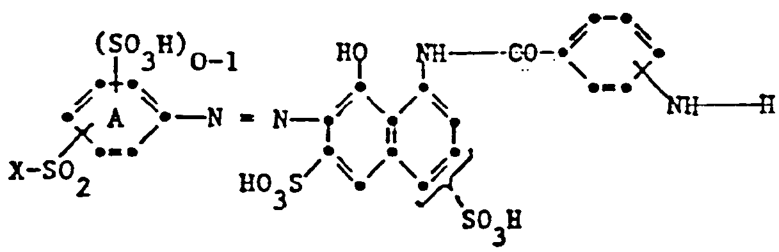

(6)

in which X is as defined for formula (1), or a precursor thereof with 2,4,6-trichloro-s-triazine and an amine of the formula

H-Z (7)

in which Z is as defined for formula (1), to give a reactive monoazo dye of the formula (1) or (2), or converting the resultant intermediate into the desired end dye, and if desired following up with a further conversion reaction.

7. Use of a reactive monoazo dye according to claim 1 for dyeing or printing cellulose-containing fibre materials.

8. Use according to claim 7 for dyeing or printing cotton.

## Revendications

1. Colorants réactifs monoazoïques répondant à la formule

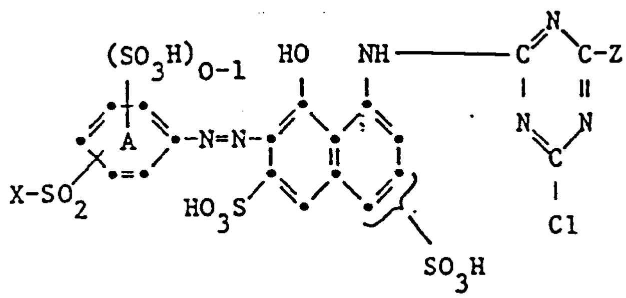

(1)

ou

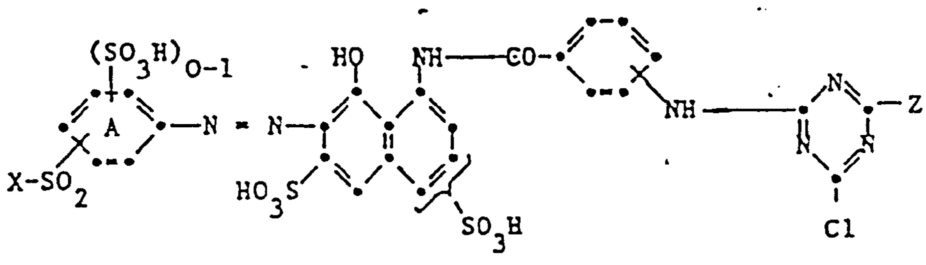

(2)

où Z représente un groupe amino non substitué ou substitué, exempt de groupes sulfo ou carboxy, à l'exception de méthylamino, et X représente le groupe vinyle, β-sulfatoéthyle, β-thiosulfatoéthyle, β-chloréthyle ou β-acétoxyéthyle, et le cycle de benzène A est éventuellement encore substitué.

2. Colorants réactifs monoazoïques selon la revendication 1, répondant à la formule

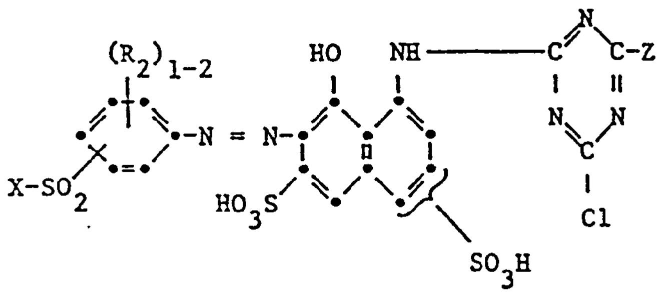

(3)

dans laquelle Z et X ont les significations qui sont valables pour la revendication 1, et $(R_2)_{1-2}$ représente 1 ou 2 substituant(s) choisi(s) parmi les groupes alcoyle en $C_1$-$C_4$, alcoxy en $C_1$-$C_4$, les atomes d'halogène et les groupes carboxy et sulfo.

3. Colorants réactifs monoazoïques selon la revendication 1, répondant à la formule

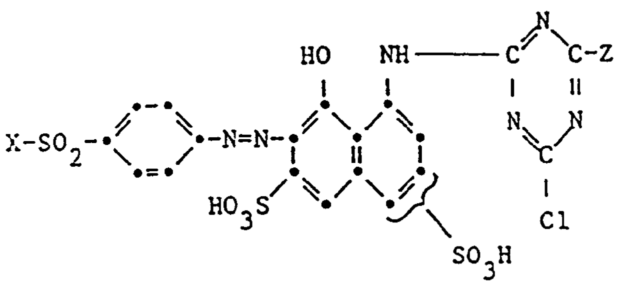

(4)

dans laquelle Z représente un reste naphtylamino non substitué ou substitué, un reste phénylamino non substitué ou substitué ou un reste N-alcoylamino ou N,N-dialcoylamino non substitué ou substitué, et X a la signification qui est valable pour la revendication 1.

4. Colorants réactifs monoazoïques selon la revendication 1, dans lesquels Z représente $NH_2$, un groupe N-(alcoyl en $C_{1-4}$)-amino ou N,N-di(alcoyl en $C_{1-4}$)-amino, qui peut être substitué par hydroxy, cyano ou alcoxy en $C_{1-4}$, N-(alcoyl en $C_{1-4}$)-N-phénylamino, qui peut être substitué dans le groupe phényle par un groupe alcoyle en $C_{1-4}$, cyclohexylamino, morpholino ou phénylamino, qui peut être substitué par un groupe alcoyle en $C_{1-4}$, par un atome d'halogène ou un groupe hydroxy, la limitation indiquée dans la revendication 1 s'appliquant auxdits colorants.

5. Colorants réactifs monoazoïques selon la revendication 4, dans lesquels X représente le groupe vinyle ou β-sulfatoéthyle.

6. Procédé de préparation de colorants réactifs monoazoiques selon la revendication 1; caractérisé en ce qu'on fait réagir des colorants répondant à la formule

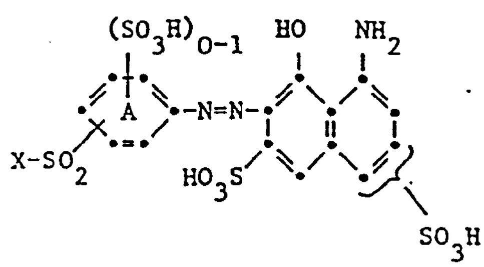

(5)

ou à la formule

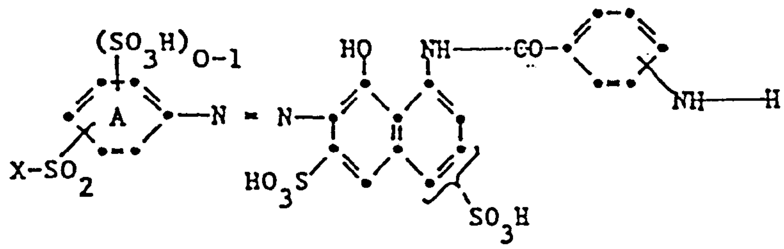

(6)

formules dans lesquelles X a la signification indiquée pour la formule (1), ou leurs précurseurs, avec la 2,4,6-trichloro-s-triazine et des amines répondant à la formule

H-Z (7)

dans laquelle Z a la signification indiquée pour la formule (1), pour les transformer en colorants monoazoïques réactifs de formule (1) ou (2), ou on transforme les produits intermédiaires obtenus en les colorants finaux souhaités, et éventuellement on réalise une réaction de transformation subséquente supplémentaire.

7. Utilisation des colorants réactifs monoazoïques selon la revendication 1 pour teindre ou imprimer des matières fibreuses contenant de la cellulose.

8. Utilisation selon la revendication 7 pour teindre ou imprimer du coton.